# FASCICULE DE BREVET EUROPEEN

(11) **EP 1 498 993 B1**
(45) Date de publication et mention de la délivrance du brevet: **15.12.2010**
(21) Numéro de dépôt: 04291730.2
(22) Date de dépôt: 08.07.2004
(51) Int. Cl.: H02G 3/06

(54) **Accessoire pour goulotte à verrouillage automatique**
Zubehör für Kabelkanal mit automatischer Verriegelung
Accessory for channel with Automatic locking

(30) Priorité: 15.07.2003 FR 0308594
(43) Date de publication de la demande: 19.01.2005
(73) Titulaire: Legrand France, 87000 Limoges (FR); Legrand SNC, 87000 Limoges (FR)
(72) Inventeur: Gautier, Bruno, 72000 Le Mans (FR)
(74) Mandataire: Orsini, Fabienne

(56) Documents cités:
- FR-A- 2 825 527

## Description

L'invention concerne, de manière générale, un accessoire destiné à relier une partie d'une première goulotte à une partie d'au moins une deuxième goulotte ou à un autre accessoire, qui comporte au moins deux éléments, à savoir un élément de base destiné à s'engager sur ladite partie de la première goulotte de façon à recouvrir un bord de cette partie et un élément d'extrémité, rapporté sur l'élément de base, destiné à s'engager sur ladite partie d'au moins la deuxième goulotte ou sur l'autre accessoire pour en recouvrir un bord, ledit élément de base et ledit élément d'extrémité comportant des moyens d'engagements complémentaires coopérant entre eux pour autoriser un déplacement relatif dudit élément d'extrémité et dudit élément de base entre une position déployée de l'élément d'extrémité par rapport à l'élément de base et une position rabattue de l'élément d'extrémité sur l'élément de base.

L'invention trouve une application particulièrement avantageuse dans la réalisation d'un accessoire d'angle pour goulotte destiné à établir une continuité entre les ailes latérales de socles de goulotte d'orientations différentes.

Toutefois l'invention peut être également appliquée à tout type d'accessoire pour goulotte tel qu'une jonction, une dérivation, un embout ou encore un support d'appareillage électrique.

On connaît déjà notamment des documents FR 2 727 578, US 1 804 954, US 1 727 772, EP 0 823 762, EP 1 006 634, IT 1 281 832, IT 1 281 834, EP 0 283 575 et FR 2 825 527 des accessoires d'angle du type précité dans lesquels l'élément d'extrémité et l'élément de base sont montés à pivotement l'un sur l'autre de sorte qu'ils sont aptes à être positionnés selon différentes positions angulaires relatives.

En outre, dans l'accessoire d'angle décrit dans le document FR 2 825 527 appartenant aux demanderesses, il est prévu des moyens de blocage débrayables, constitués d'une série de crans et d'une dent pivotante, coopérant entre eux pour bloquer en position angulaire l'élément d'extrémité et l'élément de base l'un par rapport à l'autre.

L'inconvénient majeur de l'accessoire d'angle précité est qu'il ne suffit pas qu'il soit mis en place par l'installateur sur les socles de goulotte pour être verrouillé sur ceux-ci.

En effet, après avoir mis en place l'accessoire sur les socles de goulotte, l'installateur doit bloquer en position les éléments de base et d'extrémité de cet accessoire à l'aide des moyens de blocage débrayable pour que l'accessoire monté sur lesdits socles présente une certaine tenue mécanique et que l'installation soit conforme aux normes notamment d'étanchéité.

Sans cette opération de verrouillage, l'accessoire d'angle, qui semble être définitivement monté sur les socles de goulotte, n'a en fait aucune tenue mécanique et ne remplit pas sa fonction d'étanchéité ou de continuité étanche.

Sur les chantiers, une telle opération de verrouillage est fastidieuse et peut être facilement oubliée par l'installateur.

Afin de remédier à cet inconvénient de l'état de la technique, l'invention propose un accessoire tel que défini en introduction qui, lors de sa mise en place, se verrouille automatiquement sur la goulotte correspondante ou sur un autre accessoire.

Un tel accessoire peut avantageusement être monté d'une seule main par l'installateur.

Plus particulièrement, l'accessoire selon invention est caractérisé en ce qu'il comporte des moyens de rappel élastiques, distincts desdits moyens d'engagement complémentaires, aptes à agir entre l'élément de base et l'élément d'extrémité pour ramener ce dernier dans ladite position déployée.

D'autres caractéristiques non limitatives et avantageuses de l'accessoire selon l'invention sont les suivantes :
- lesdits moyens d'engagement autorisent un pivotement de l'élément d'extrémité par rapport à l'élément de base ;
- lesdits moyens d'engagement autorisent une translation de l'élément d'extrémité par rapport à l'élément de base ;
- lesdits moyens d'engagement comprennent une rampe sur laquelle est engagée une fente ;
- la rampe appartient à l'élément de base et la fente appartient à l'élément d'extrémité ;
- la rampe et la fente s'étendent selon un arc de cercle ou selon une droite;
- lesdits moyens d'engagement comprennent une rainure dans laquelle coulisse une nervure ;
- la rainure appartient à l'élément de base et la nervure appartient à l'élément d'extrémité ;
- les moyens de rappel élastiques comprennent une languette flexible interposée entre l'élément de base et l'élément d'extrémité ;
- la languette, qui vient de formation avec un desdits éléments, prend appui par son extrémité libre sur un bord d'extrémité de l'autre desdits éléments ;
- la languette est rattachée à l'élément d'extrémité et s'étend librement dans une fenêtre prévue dans ledit élément d'extrémité ;
- l'élément d'extrémité comprend deux flasques, un flasque extérieur destiné à recouvrir le bord de la partie de la deuxième goulotte ou de l'accessoire et un flasque intérieur, entre lesquels est prise en sandwich une partie de l'élément de base ;
- le flasque intérieur de l'élément d'extrémité comprend, d'une part, une fente coopérant avec une rampe faisant saillie de ladite partie dudit élément de base, et, d'autre part, une fenêtre dans laquelle s'étend librement une languette flexible rattachée à un bord de ladite fenêtre, cette languette prenant appui sur un bord d'extrémité de ladite partie de l'élément de base ;
- le flasque intérieur de l'élément d'extrémité comprend un rebord formant une nervure et ladite partie de l'élément de base comprend une rampe en saillie dans laquelle est formée une rainure dans laquelle coulisse ladite nervure ;
- l'élément de base comprend au moins une portion sécable qui peut constituer un secteur angulaire ;
- l'élément de base comprend une partie centrale sur laquelle est rapporté l'élément d'extrémité et une partie d'extrémité située à l'opposée de l'élément d'extrémité, le flasque extérieur de l'élément d'extrémité présentant un aspect externe identique à l'aspect externe de la partie d'extrémité de l'élément de base ;
- l'accessoire constitue une joue destinée à établir une continuité de parois entre deux ailes latérales de deux socles de goulotte s'étendant selon la même direction ou selon deux directions différentes. Dans ce cas ladite joue peut porter un bandeau assurant une continuité de parois entre les retours en équerre des ailes latérales desdits socles, ledit bandeau comportant des moyens de montage d'un tronçon de couvercle adapté à fermer lesdits socles.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un mode de réalisation préféré d'un accessoire selon l'invention ;
- la figure 2 est une vue schématique en perspective de l'accessoire de la figure 1 prêt à être rapporté sur deux socles de tronçons de goulotte ;
- la figure 3 est une vue schématique en perspective de deux accessoires du type de celui de la figure 1 rapportés sur deux socles de tronçons de goulotte ;
- la figure 4 est une vue schématique en perspective des socles de la figure 3 fermés par un tronçon de couvercle ;
- la figure 5 est une vue arrière de l'accessoire de la figure 1 dans la position rabattue de l'élément d'extrémité;
- la figure 6 est une vue arrière de l'accessoire de la figure 1 dans la position déployée de l'élément d'extrémité;
- la figure 7 est une vue arrière de l'élément de base de l'accessoire de la figure 1 ;
- la figure 8 est une vue avant de l'élément de base de la figure 7;
- la figure 9 est une vue avant de l'élément d'extrémité de l'accessoire de la figure 1 ; et
- la figure 10 est une vue arrière de l'élément d'extrémité de la figure 9.

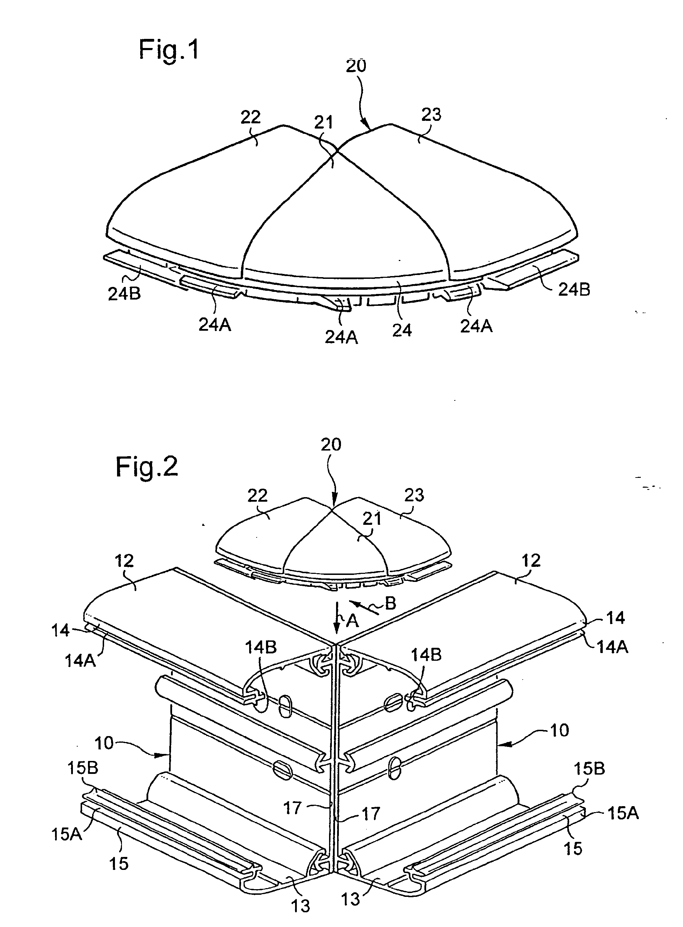

Sur la figure 1, on a représenté un accessoire utilisé pour établir la liaison entre deux tronçons de goulotte coupés et posés bout à bout pour former ici un angle extérieur.

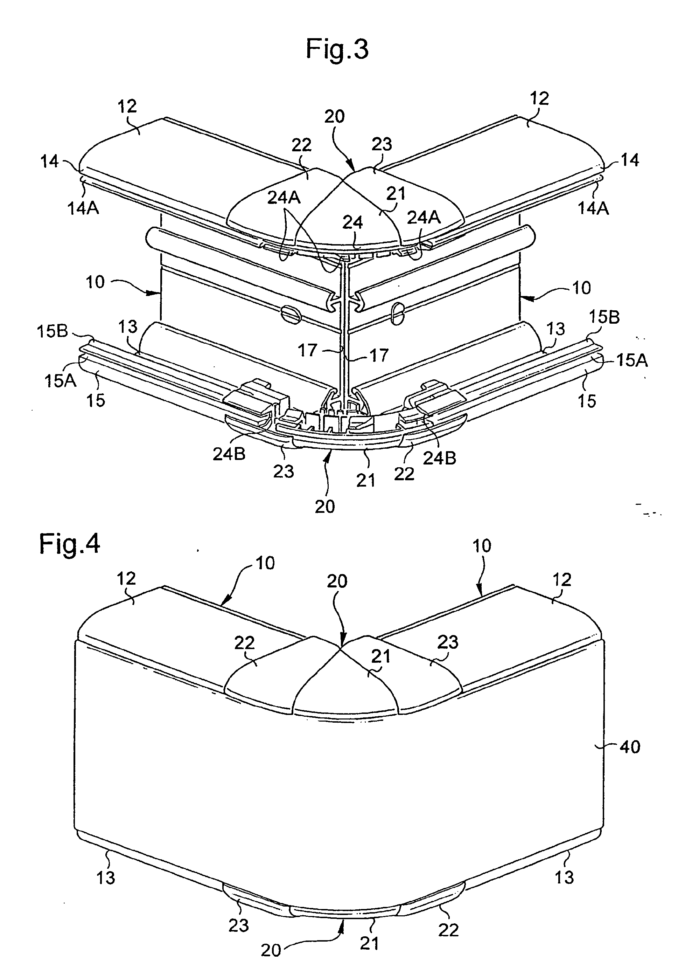

Comme le montrent les figures 2 à 4, les deux tronçons de goulotte sont identiques et comprennent chacun, pour l'essentiel, un socle 10 présentant une section en U, pourvu de deux ailes latérales 12,13 dont les retours en équerre 14,15, dirigés l'un vers l'autre, comprennent des moyens de montage d'un tronçon de couvercle 40 (voir figure 4) de fermeture dudit socle 10.

Les socles 10 sont préférentiellement réalisés par extrusion d'une matière plastique.

Ici, les moyens de montage du tronçon de couvercle 40 comportent, pour chaque retour en équerre 14,15, des moyens d'engagement constitués par une rainure 14A,15A et, à l'extérieur de chaque rainure 14A,15A, à proximité de son fond, un bourrelet d'encliquetage 14B,15B (voir figures 2 et 3), chaque bourrelet d'encliquetage 14B, 15B courant le long de chaque rainure 14A,15A.

En correspondance, le tronçon de couvercle 40 comporte les moyens de montage complémentaires qui sont aptes à coopérer, d'une part, avec chaque rainure 14A,15A et, d'autre part, avec chaque bourrelet d'encliquetage 14B,15B.

Le tronçon de couvercle 40 ne faisant pas partie à proprement parler de l'invention, ses moyens de montage sur les socles 10 ne seront pas ici décrits dans le détail.

Il intéressant de noter qu'ici le tronçon de couvercle 40, réalisé avantageusement en matière plastique, est agencé pour présenter une certaine flexibilité afin d'être adapté à une configuration de rainure et de bourrelet d'encliquetage présentant un trajet courbe selon un rayon de courbure déterminé, tel que cela sera explicité ultérieurement.

L'accessoire 20 représenté sur la figure 1 est ici une joue destinée à établir une continuité de parois entre deux ailes latérales 12 ou 13 desdits socles 10 de goulotte s'étendant selon deux directions différentes et aboutés à l'onglet par le bord d'extrémité 17 coupé de leur fond.

Bien entendu selon d'autres variantes non représentées on peut prévoir que cet accessoire soit une joue qui assure une continuité de parois entre deux cloisons de fractionnement rapportées sur les fonds des socles 10 aboutés ou soit une joue dite de jonction qui assure une continuité de parois entre les ailes latérales des socles de goulotte aboutés selon une seule direction. Un tel accessoire peut encore être une dérivation, un embout ou un accessoire d'angle intérieur, ou encore un support d'appareillage.

L'accessoire 20 porte un bandeau 24 assurant une continuité de parois entre les retours en équerre 14,15 des ailes latérales 12,13 desdits socles 10 (voir figure 3).

Ce bandeau 24 comporte des moyens de montage d'un tronçon de couvercle qui s'étendent, ici de manière discontinue, selon un arc de cercle d'un rayon de courbure donné, de sorte que ledit accessoire d'angle autorise avantageusement le montage du tronçon de couvercle 40 adapté à fermer lesdits socle 10 pour permettre la fermeture de l'angle formé entre lesdits socles 10 et d'une partie de ces derniers par un seul tronçon de couvercle 40 sans interruption ni arête ou pliure dans ledit angle (voir figure 4).

Ces moyens de montage comprennent ici des portions de rainure 24A qui assurent une continuité de rainure entre les rainures 14A,15A prévues sur les retours en équerre 14,15 des ailes latérales 12,13 desdits socles 10.

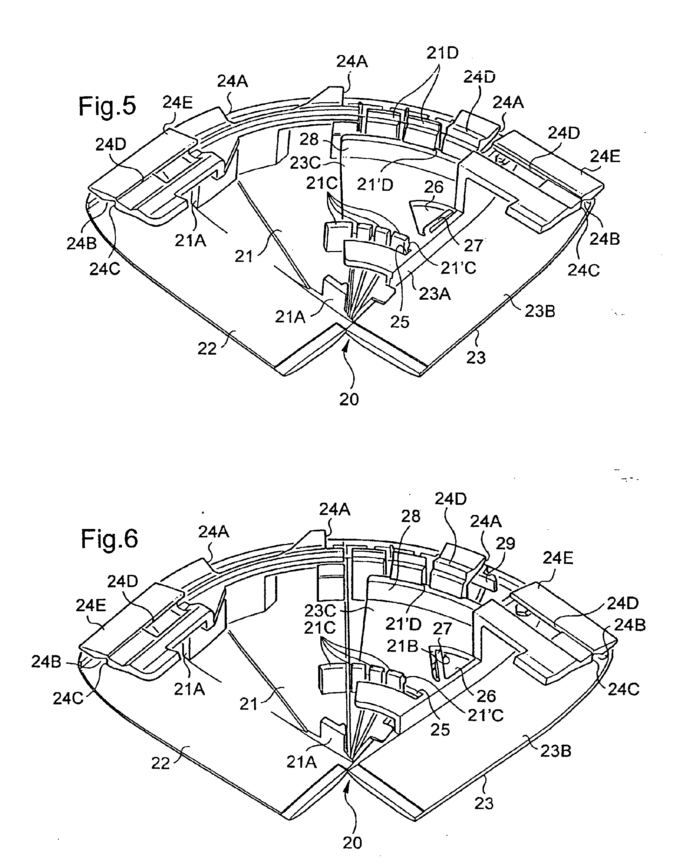

En outre, ils comprennent des portions de bourrelet d'encliquetage 24D (voir figures 5 et 6) qui assurent une continuité de bourrelet d'encliquetage entre les bourrelets d'encliquetage 14B,15B prévus sur les retours en équerre 14,15 des ailes latérales 12,13 des socles 10 aboutés. Comme le montrent plus particulièrement les figures 5 et 6, deux desdites portions de bourrelet d'encliquetage 24D sont prévues au dos de languettes 24E, prévues sur la face arrière de l'accessoire 20, définissant avec le bandeau 24 une rainure 24B d'engagement de l'accessoire 20 sur les retours en équerre 14,15 desdits socles 10 (voir figure 3) pour la solidarisation de l'accessoire 20 auxdits socles 10. Ces languettes 24E portent à l'avant une dent 24C d'accrochage destinée à s'encliqueter sur lesdits bourrelets d'encliquetage 14B,15B prévus sur les retours en équerre 14,15 des ailes latérales 12,13 des socles 10 aboutés.

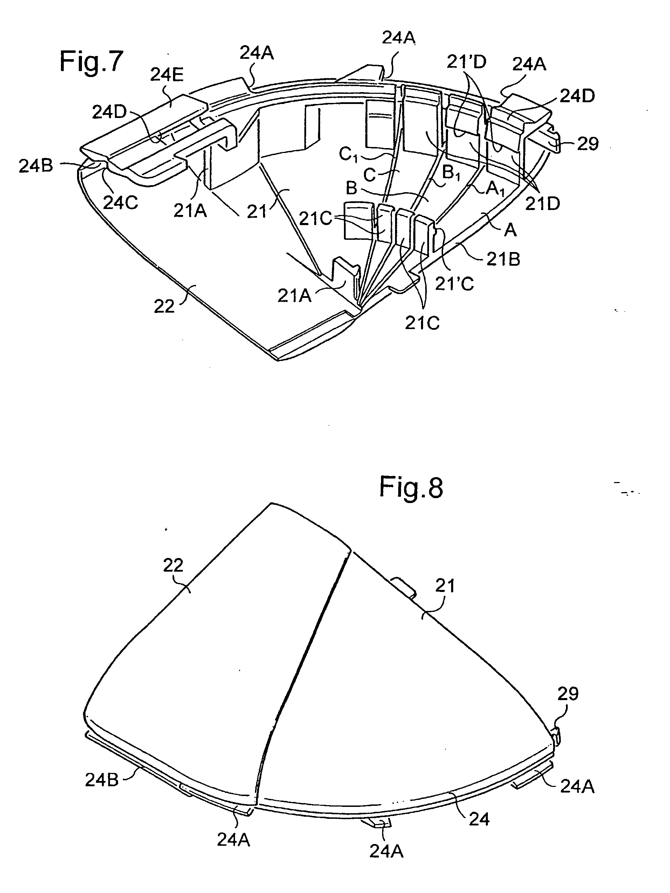

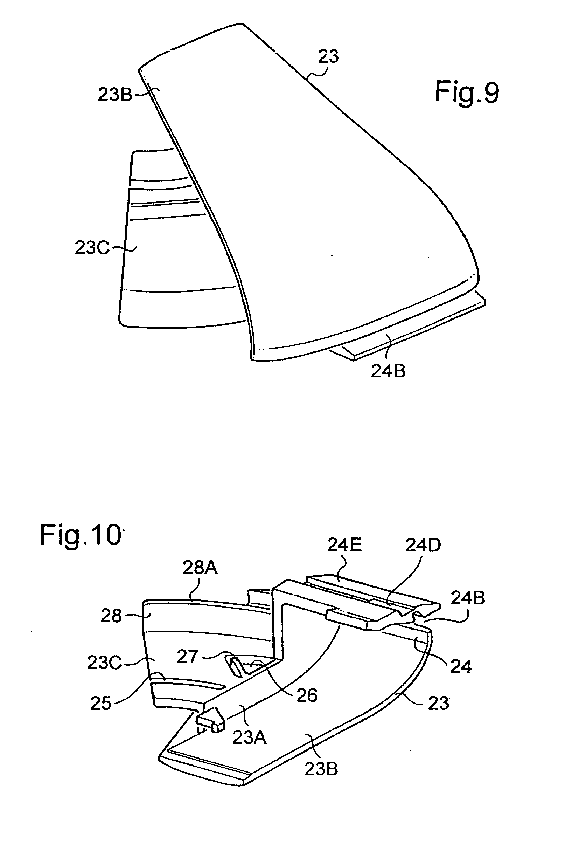

Comme le montrent les figures 5 à 10, l'accessoire 20 représenté sur la figure 1 comporte au moins deux éléments, à savoir un élément de base 21,22 (voir figures 7 et 8) destiné à s'engager sur une aile latérale 12,13 d'un desdits socles 10 de goulotte aboutés de façon à recouvrir le bord de cette aile latérale 12,13 et un élément d'extrémité 23 (voir figures 9 et 10) rapporté sur l'élément de base 21,22 destiné à s'engager sur une aile latérale 12,13 de l'autre desdits socles 10 de goulotte aboutés pour en recouvrir un bord.

Préférentiellement l'élément de base 21,22 et l'élément d'extrémité 23 de l'accessoire 20 sont des pièces monobloc réalisées par moulage d'une matière plastique

Plus particulièrement, l'élément de base 21,22 de l'accessoire 20 comprend, d'une part, une partie d'extrémité 22 qui porte sur sa face arrière la languette 24E délimitant avec le bandeau 24 ladite rainure 24B d'engagement sur le retour en équerre 14,15 d'une aile latérale 12,13 d'un socle 10 de façon que cette partie d'extrémité 22 recouvre le bord coupé de cette dernière et, d'autre part, une partie centrale 21 assurant la continuité de paroi entre les deux ailes latérales 12, 13 des socles 10.

L'élément d'extrémité 23 de l'accessoire 20 est rapporté sur la partie centrale 21 de l'élément de base 21,22.

À cet effet l'élément d'extrémité 23 comprend deux flasques, un flasque extérieur 23B destiné à recouvrir le bord coupé de l'aile latérale 12,13 du socle 10 correspondant et un flasque intérieur 23C, entre lesquels est prise en sandwich une portion de la partie centrale 21 de l'élément de base 21,22 (voir figures 9 et 10).

Le flasque extérieur 23B de l'élément d'extrémité 23 porte sur sa face arrière ladite languette 24E définissant avec le bandeau 24 ladite rainure 24B d'engagement sur le retour en équerre 14,15 d'une aile latérale 12,13 du socle 10 correspondant de façon que ce flasque extérieur 23B de l'élément d'extrémité recouvre le bord coupé de ladite aile latérale 12,13.

Le flasque extérieur 23B de l'élément d'extrémité 23 présente un aspect externe identique à l'aspect externe de la partie d'extrémité 22 de l'élément de base 21,22.

Ici, la partie centrale 21 de l'élément de base 21,22 forme un secteur angulaire, la partie d'extrémité 22 de l'élément de base 21,22 forme un autre secteur angulaire et l'élément d'extrémité 23 forme également un secteur angulaire identique à celui formé par la partie d'extrémité 22 de l'élément de base 21,22.

Le flasque extérieur 23B de l'élément d'extrémité 23 porte sur sa face arrière tournée vers l'intérieur des socles 10 un muret 23A qui s'étend selon un rayon. Le flasque intérieur 23C s'étend en porte-à-faux à partir de ce muret 23A en regard de la face arrière dudit flasque extérieur 23B. Le muret 23A porte également ladite languette 24E définissant avec le bandeau 24 la rainure 24B d'engagement. Lors de la mise en place de l'accessoire 20 sur les tronçons de goulotte, ce muret 23A forme un rebord d'appui de l'élément d'extrémité 23 de l'accessoire 20 sur le bord coupé de l'aile latérale 12,13 du socle 10 correspondant, comme cela sera expliqué ultérieurement.

L'élément de base 21,22 de l'accessoire 20 porte sur sa face arrière tournée vers l'intérieur des socles 10, à la jonction entre sa partie centrale 21 et sa partie d'extrémité 22, deux portions de muret 21A qui s'étendent selon un rayon. Une des deux portions de muret 21A porte ladite languette 24E définissant avec le bandeau 24 la rainure 24B d'engagement. Lors de la mise en place de l'accessoire 20 sur les tronçons de goulotte, ces portions de muret 21A forment un rebord d'appui de l'élément de base 21,22 de l'accessoire 20 sur le bord coupé de l'aile latérale 12,13 du socle 10 correspondant, comme cela sera expliqué ultérieurement.

Par ailleurs, l'élément de base 21,22 et l'élément d'extrémité 23 de l'accessoire 20 comportent des moyens d'engagement complémentaires coopérant entre eux pour autoriser un déplacement relatif dudit élément d'extrémité 23 et dudit élément de base 21,22 entre une position déployée de l'élément d'extrémité 23 par rapport à l'élément de base 21,22 ( voir figure 6) et une position rabattue de l'élément d'extrémité 23 sur l'élément de base 21,22 (voir figure 5).

Ici, lesdits moyens d'engagement autorisent un pivotement de l'élément d'extrémité 23 par rapport à l'élément de base 21,22 dans le plan desdites ailes latérales 12,13 aboutées desdits socles 10 de sorte que lesdits éléments sont aptes à être positionnés selon différentes positions angulaires relatives pour que l'accessoire 20 s'adapte à l'angle formé entre les socles 10 des tronçons de goulottes.

Bien entendu dans le cas d'un accessoire formant une jonction, un embout ou un support d'appareillage on pourra prévoir que ces moyens d'engagement complémentaires de l'élément de base et de l'élément d'extrémité autorisent une translation des deux éléments l'un par rapport à l'autre.

Selon le mode de réalisation de l'accessoire 20 représenté sur les figures 5 et 6, ces moyens d'engagement complémentaires comprennent, d'une part, une rampe 21 C sur laquelle est engagée une fente 25, et, d'autre part, une rainure 21'D dans laquelle coulisse une nervure 28.

Ici, la rampe 21 C, la fente 25, la rainure 21'D et la nervure 28 s'étendent selon deux arcs de cercle concentriques pour permettre le mouvement de pivotement relatif des deux éléments de l'accessoire 20. Mais, dans une variante de l'accessoire non représentée, on pourra prévoir que la rampe, la fente, la rainure et la nervure s'étendent selon deux droites parallèles pour permettre un mouvement de translation relatif des deux éléments de l'accessoire.

Comme le montrent les figures 5 à 10, selon le mode de réalisation de l'accessoire représenté, la rampe 21 C et la rainure 21'D appartiennent à l'élément de base 21,22 et la fente 25 ainsi que la nervure 28 appartiennent à l'élément d'extrémité 23.

Plus particulièrement, le flasque intérieur 23C de l'élément d'extrémité 23 comprend la fente 25 qui débouche sur son bord libre et qui s'enfile sur la rampe 21 C qui fait saillie de la face arrière de la partie centrale 21 de l'élément de base 21,22 prise en sandwich entre les flasques intérieur 23C et extérieur 23B de l'élément d'extrémité 23.

La rampe 21 C comprend sur une face une dent 21'C qui prend appui sur le bord de la fente 25 du flasque intérieur 23C de l'élément d'extrémité 23 pour plaquer ce dernier contre l'élément de base 21,22.

Le flasque intérieur 23C en forme de secteur angulaire comprend un rebord formant la nervure 28 et ladite partie centrale 21 de l'élément de base 21,22 comprend, à proximité de son bandeau 24, une rampe 21 D qui fait saillie de sa face arrière, qui s'étend en arc de cercle, et dans laquelle est formée la rainure 21'D dans laquelle coulisse ladite nervure 28.

Le bandeau 24 de l'accessoire 20, la rampe 21 C sur laquelle s'enfile la fente 25 et la rainure 21'D dans laquelle coulisse la nervure 28 s'étendent selon des arcs de cercle concentriques.

Comme le montre plus particulièrement la figure 7, la partie centrale de l'élément de base 21,22 de l'accessoire 20 comprend à l'opposé de la partie d'extrémité 22, au moins une portion sécable. Ici, elle comprend une pluralité de portions sécables A, B, C délimitées par des lignes d'affaiblissement A1, B1, C1 qui séparent en languettes les rampes 21C et 21 D portées par ladite partie centrale 21.

Chaque partie sécable A, B, C constitue un secteur angulaire.

L'élément d'extrémité 23, et, en particulier son flasque extérieur 23B, permet de recouvrir la coupe éventuelle pratiquée dans la partie centrale 21 de l'élément de base 21,22 selon une ligne d'affaiblissement A1, B1 ou C1, pour parfaire l'esthétique de l'ensemble.

En détachant une ou plusieurs des parties sécables A, B, C de la partie centrale 21 de l'élément de base 21, 22, l'utilisateur peut adapter l'accessoire 20 représenté à différents angles extérieurs variant entre 90 et 120 degrés formés entre les socles 10 de tronçon de goulotte.

Lorsque l'utilisateur détache une des parties sécables A, B, C, il raccourcit d'autant les rampes 21C, 21 D puisqu'elles sont constituées de languettes appartenant aux différentes parties sécables de l'élément de base 21, 22.

Selon l'exemple représenté, en découpant la partie A de l'élément de base 21,22, l'accessoire 20 peut être adapté, par pivotement des deux éléments de base et d'extrémité l'un par rapport à l'autre, à un angle extérieur d'environ 100 degrés.

En découpant les parties A et B de l'élément de base 21,22, l'accessoire 20 peut en outre être adapté, par pivotement des deux éléments de base et d'extrémité l'un par rapport à l'autre, à un angle extérieur d'environ 110 degrés.

En découpant les parties A, B, C, l'accessoire 20 peut être adapté à un angle extérieur d'environ 120 degrés.

Tel que représenté sur la figure 6, l'accessoire 20 peut être adapté, en faisant pivoter l'élément d'extrémité 23 et l'élément de base 21,22 l'un par rapport à l'autre, à un angle extérieur d'environ 90 degrés.

Grâce au recouvrement de la partie d'extrémité 22 et de l'élément d'extrémité 23, chaque angle théorique formé par l'accessoire 20 bénéficie d'une tolérance de plus ou moins 5 degrés.

Selon une caractéristique particulièrement avantageuse de l'accessoire 20 représenté sur les figures, il comporte des moyens de rappel élastiques, distincts desdits moyens d'engagement complémentaires qui autorisent le déplacement des deux éléments l'un par rapport à l'autre, qui sont aptes à agir entre l'élément de base 21, 22 et l'élément d'extrémité 23 pour ramener ce dernier dans ladite position déployée (voir figure 6).

Ces moyens de rappel élastiques comprennent ici préférentiellement une languette 27 flexible interposée entre l'élément de base 21,22 et l'élément d'extrémité 23.

La languette 27 qui vient de formation avec un des éléments de l'accessoire 20 prend appui par son extrémité libre sur un bord d'extrémité de l'autre des éléments.

Selon l'exemple de l'accessoire 20 représenté sur les figures 5 et 6, la languette 27 est rattachée à l'élément d'extrémité 23 et s'étend librement dans une fenêtre 26 prévue dans le flasque intérieur 23C de l'élément d'extrémité 23 pour prendre appui sur un bord d'extrémité 21 B de la partie centrale 21 de l'élément de base 21,22. La languette 27 est rattachée à un bord de la fenêtre 26.

La mise en place de l'accessoire 20 représenté sur la figure 1 sur les socles 10 de tronçons de goulotte va maintenant être décrit en référence à la figure 2.

Au montage, l'accessoire 20 prend la configuration représentée sur la figure 6 dans laquelle l'élément d'extrémité 23 est positionné en position déployée par rapport à l'élément de base 21,22. Dans cette position, la languette 27 est non fléchie.

L'utilisateur approche l'accessoire 20 tel que représenté sur la figure 6 des ailes latérales 12 des socles 10 selon la direction A parallèle aux bords d'extrémité 17 coupés aboutés des fonds des socles 10. Cette approche s'effectue à distance de ces bords d'extrémité 17 coupés aboutés jusqu'à ce que la partie d'extrémité 22 de l'élément de base 21,22 et l'élément d'extrémité 23 de l'accessoire 20 viennent au contact desdites ailes latérales 12.

Puis, l'accessoire 20 est approché selon la direction B perpendiculaire à la direction A des bords d'extrémité 17 coupés aboutés. Pendant cette approche, les murets 21A, 23A de l'accessoire 20 viennent progressivement en appui sur les bords d'extrémité coupés des ailes latérales 12 des socles 10. L'élément d'extrémité 23 pivote par rapport à l'élément de base 21,22 pour prendre sa position rabattue sur ce dernier. Dans cette position rabattue, la languette 27 est plus ou moins fléchie (voir figure 5). Pendant cette approche, la languette 27 élastique tend à ramener l'élément d'extrémité 23 dans sa position déployée (figure 6), l'élément de base 21,22 et l'élément d'extrémité 23 adoptent alors automatiquement un angle qui correspond exactement à celui formé par les socles 10, les murets 21A, 23A de l'accessoire 20 restant en appui contre les bords d'extrémité coupés desdites ailes latérales 12. L'utilisateur n'a pas alors à intervenir sur l'accessoire 20 pour l'adapter en bout de course à l'angle formé par lesdits socles 10.

À la fin du mouvement de translation selon la direction B, les moyens d'encliquetage 24B,24C de l'accessoire 20 coopèrent avec les retours en équerre 14 desdites ailes latérales 12 desdits socles 10 et l'accessoire 20 est verrouillé sur ces derniers.

Cette mise en place de l'accessoire 20 sur lesdits socles est aisée et peut se faire d'une seule main par l'utilisateur tout en garantissant qu'en fin de mise en place les parties d'extrémités de l'accessoire sont bien en appui sur les ailes latérales correspondantes pour assurer la tenue mécanique de l'accessoire sur lesdits socles et une continuité de parois étanche entre lesdites ailes.

La présente invention n'est nullement limitée au mode de réalisation décrit et représenté mais l'homme du métier saura y apporter toute variante conforme à son esprit.

En particulier on pourra prévoir selon l'invention un élément supplémentaire en forme de secteur angulaire à rapporter de manière fixe sur la partie centrale de l'élément de base représenté sur les figures 7 et 8 pour en constituer un prolongement angulaire. Comme le montrent les figures 5 et 6, il est prévu sur l'élément de base 21,22 un crochet 29 pour l'ajout de l'élément supplémentaire. L'élément d'extrémité est alors rapporté sur cet élément de base prolongé pour que l'accessoire selon l'invention s'adapte à des angles extérieurs formés entre les socles de goulotte compris entre 60 et 80 degrés.

L'accessoire peut être de tout type et en particulier peut comporter une partie cache recouvrant l'espace libre entre les couvercles des tronçons de goulotte.

Les moyens de rappel élastique peuvent être tout à fait différents de la languette, par exemple être du type ressort et être rattachés à l'élément de base de l'accessoire.

## Revendications

1. Accessoire (20) destiné à relier une partie (12) d'une première goulotte à une partie (12) d'au moins une deuxième goulotte ou à un autre accessoire, qui comporte au moins deux éléments, à savoir un élément de base (21,22) destiné à s'engager sur ladite partie (12) de la première goulotte de façon à recouvrir un bord de cette partie (12) et un élément d'extrémité (23), rapporté sur l'élément de base (21,22), destiné à s'engager sur ladite partie (12) d'au moins la deuxième goulotte ou sur l'autre accessoire pour en recouvrir un bord, ledit élément de base (21,22) et ledit élément d'extrémité (23) comportant des moyens d'engagement (21C,21D,21'D,25,28) complémentaires coopérant entre eux pour autoriser un déplacement relatif dudit élément d'extrémité (23) et dudit élément de base (21,22) entre une position déployée de l'élément d'extrémité (23) par rapport à l'élément de base (21,22) et une position rabattue de l'élément d'extrémité (23) sur l'élément de base (21,22), accessoire **caractérisé en ce qu'**il comporte des moyens de rappel élastiques (27), distincts desdits moyens d'engagement (21C,21 D,21'D,25,28) complémentaires, aptes à agir entre l'élément de base (21,22) et l'élément d'extrémité (23) pour ramener ce dernier dans ladite position déployée.

2. Accessoire (20) selon la revendication 1, **caractérisé en ce que** lesdits moyens d'engagement (21C,21D,21'D,25,28) autorisent un pivotement de l'élément d'extrémité (23) par rapport à l'élément de base (21,22).

3. Accessoire selon la revendication 1, **caractérisé en ce que** lesdits moyens d'engagement autorisent une translation de l'élément d'extrémité par rapport à l'élément de base.

4. Accessoire (20) selon l'une des revendications 1 à 3, **caractérisé en ce que** lesdits moyens d'engagement comprennent une rampe (21C) sur laquelle est engagée une fente (25).

5. Accessoire (20) selon la revendication 4, **caractérisé en ce que** la rampe (21 C) appartient à l'élément de base (21,22) et la fente (25) appartient à l'élément d'extrémité (23).

6. Accessoire (20) selon l'une des revendications 4 ou 5, **caractérisé en ce que** la rampe (21 C) et la fente (25) s'étendent selon un arc de cercle.

7. Accessoire (20) selon l'une des revendications 4 ou 5, **caractérisé en ce que** la rampe et la fente sont droites.

8. Accessoire (20) selon l'une des revendications précédentes, **caractérisé en ce que** lesdits moyens d'engagement comprennent une rainure (21'D) dans laquelle coulisse une nervure (28).

9. Accessoire (20) selon la revendication 8, **caractérisé en ce que** la rainure (21'D) appartient à l'élément de base et la nervure (28) appartient à l'élément d'extrémité (23).

10. Accessoire (20) selon l'une des revendications 1 à 9, **caractérisé en ce que** les moyens de rappel élastiques comprennent une languette (27) flexible interposée entre l'élément de base (21,22) et l'élément d'extrémité (23).

11. Accessoire (20) selon la revendication 10, **caractérisé en ce que** ladite languette (27), qui vient de formation avec un desdits éléments, prend appui par son extrémité libre sur un bord d'extrémité de l'autre desdits éléments.

12. Accessoire (20) selon l'une des revendications 10 ou 11, **caractérisé en ce que** ladite languette (27) est rattachée à l'élément d'extrémité (23) et s'étend librement dans une fenêtre (26) prévue dans ledit élément d'extrémité (23).

13. Accessoire (20) selon l'une des revendications 1 à 12, **caractérisé en ce que** l'élément d'extrémité (23) comprend deux flasques, un flasque extérieur (23B) destiné à recouvrir le bord de la partie (12) de la deuxième goulotte ou de l'accessoire et un flasque intérieur (23C), entre lesquels est prise en sandwich une partie de l'élément de base (21,22).

14. Accessoire (20) selon la revendication 13, **caractérisé en ce que** le flasque intérieur (23C) de l'élément d'extrémité (23) comprend, d'une part, une fente (25) coopérant avec une rampe (21C) faisant saillie de ladite partie dudit élément de base (21,22), et, d'autre part, une fenêtre (26) dans laquelle s'étend librement une languette (27) flexible rattachée à un bord de ladite fenêtre (26), cette languette (27) prenant appui sur un bord d'extrémité de ladite partie de l'élément de base (21,22).

15. Accessoire (20) selon l'une des revendications 13 ou 14, **caractérisé en ce que** le flasque intérieur (23C) de l'élément d'extrémité (23) comprend un rebord formant une nervure (28) et ladite partie de l'élément de base (21,22) comprend une rampe (21 D) en saillie dans laquelle est formée une rainure (21'D) dans laquelle coulisse ladite nervure (28).

16. Accessoire (20) selon l'une des revendications précédentes, **caractérisé en ce que** l'élément de base (21,22) comprend au moins une portion sécable (A, B, C).

17. Accessoire (20) selon la revendication 16, **caractérisé en ce que** chaque portion sécable (A, B, C) constitue un secteur angulaire.

18. Accessoire (20) selon l'une des revendications 13 à 17, **caractérisé en ce** l'élément de base (21,22) comprend une partie centrale (21) sur laquelle est rapporté l'élément d'extrémité (23) et une partie d'extrémité (22) située à l'opposée de l'élément d'extrémité (23), le flasque extérieur (23B) de l'élément d'extrémité (23) présentant un aspect externe identique à l'aspect externe de la partie d'extrémité (22) de l'élément de base (21,22).

19. Accessoire (20) selon l'une quelconque des revendications précédentes, **caractérisé en ce qu'**il constitue une joue destinée à établir une continuité de parois entre deux ailes latérales (12) de deux socles (10) de goulotte s'étendant selon la même direction ou selon deux directions différentes.

20. Accessoire (20) selon la revendication 19, **caractérisé en ce que** ladite joue porte un bandeau (24) assurant une continuité de parois entre les retours en équerre (14) des ailes latérales (12) desdits socles (10), ledit bandeau (24) comportant des moyens de montage (24A) d'un tronçon de couvercle (40) adapté à fermer lesdits socles (10).

## Claims

1. An accessory (20) for connecting a portion (12) of a first conduit to a portion (12) of at least one second conduit or to another accessory, which accessory comprises at least two elements, namely a base element (21, 22) for engaging on said portion (12) of the first conduit so as to cover an edge of said portion, and an end element (23) fitted to the base element (21, 22) for engaging on said portion (12) of at least the second conduit or on the other accessory in order to cover an edge thereof, said base element (21, 22) and said end element (23) including complementary engagement means (21C, 21D, 21'D, 25, 28) co-operating with one another to allow relative displacement of said end element (23) and said base element (21, 22) between a position in which the end element (23) is deployed relative to the base element (21, 22) and a position in which the end element (23) is retracted towards the base element (21, 22), which accessory includes resilient return means (27) distinct from said complementary engagement means (21C, 21D, 21'D, 25, 28) and suitable for acting between the base element (21, 22) and the end element (23) in order to return the end element into said deployed position.

2. An accessory (20) according to claim 1, **characterized in that** said engagement means (21C, 21D, 21'D, 25, 28) enable the end element (23) to pivot relative to the base element (21, 22).

3. An accessory (20) according to claim 1, **characterized in that** said engagement means allow the end element to move in translation relative to the base element.

4. An accessory (20) according to one of claims 1 to 3, **characterized in that** said engagement means comprise a strip (21C) having a slot (25) engaged thereon.

5. An accessory (20) according to claim 4, **characterized in that** the strip (21C) belongs to the base element (21, 22) and the slot (25) belongs to the end element (23).

6. An accessory (20) according to one of claims 4 or 5, **characterized in that** the strip (21C) and the slot (25) extend over a circular arc.

7. An accessory (20) according to one of claims 4 or 5, **characterized in that** the strip and the slot are straight.

8. An accessory (20) according to one of the preceding claims, **characterized in that** said engagement means comprise a groove (21'D) in which a rib (28) slides.

9. An accessory (20) according to claim 8, **characterized in that** the groove (21'D) belongs to the base element (21, 22) and the rib (28) belongs to the end element (23).

10. An accessory (20) according to on of claims 1 to 9, **characterized in that** the resilient return means comprise a flexible tongue (27) interposed between the base element (21, 22) and the end element (23).

11. An accessory (20) according to claim 10, **characterized in that** said tongue (27) is made integrally with one of the elements and bears via its free end against an end edge of the other one of said elements.

12. An accessory (20) according to one of claims 10 or 11, **characterized in that** said tongue (27) is attached to the end element (23) and extends freely in a window (26) provided in said end element (23).

13. An accessory (20) according to one of claims 1 to 12, **characterized in that** the end element (23) comprises two plates, an outer plate (23B) for covering the edge of the portion (12) of the second conduit or accessory, and an inner plate (23C), with a portion of the base element (21, 22) being sandwiched between the plates.

14. An accessory (20) according to claim 13, **characterized in that** the inner plate (23C) of the end element (23) includes firstly a slot (25) co-operating with a strip (21C) projecting from said portion of said base element (21, 22), and secondly a window (26) into which there extends freely a flexible tongue (27) attached to an edge of said window (26), said tongue (27) bearing against an end edge of said base element (21, 22).

15. An accessory (20) according to one of claims 13 or 14, **characterized in that** the inner plate (23C) of the end element (23) includes a rim forming a rib (28) and said portion of the base element (21, 22) includes a projecting strip (21D) in which there is formed a groove (21'D) in which said rib (28) slides.

16. An accessory (20) according to one of the preceding claims, **characterized in that** the base element (21, 22) includes at least one break-off portion (A, B, C).

17. An accessory (20) according to claim 16, wherein each break-off portion (A, B, C) constitutes an angular sector.

18. An accessory (20) according to one of claims 13 to 17, **characterized in that** the base element (21, 22) comprises a central portion (21) on which the end element (23) is fitted, and an end portion (22) situated remote from the end element (23), the outer plate (23B) of the end element (23) presenting outside appearance that is identical to the outside appearance of the end portion (22) of the base element (21, 22).

19. An accessory (20) according to anyone of the preceding claims, **characterized in that** it constitutes a cheek for establishing wall continuity between two flanges (12) of two conduit channels (10) extending in the same direction or in two different directions.

20. An accessory (20) according to claim 19, **characterized in that** said cheek carries a band (24) providing wall continuity between the bracket-forming rims (14) of the flanges (12) of said channels (10), said band (24) including mounting means (24A) for mounting a cover segment (40) adapted to close said channels (10).

## Patentansprüche

1. Zubehör (20) zum Verbinden eines Teils (12) eines ersten Kabelkanals mit einem Teil (12) von mindestens einem zweiten Kabelkanal oder mit einem anderen Zubehör, das mindestens zwei Elemente umfasst, nämlich ein Grundelement (21,22), das in dieses Teil (12) des ersten Kabelkanals so eingreift, dass es einen Rand dieses Teils (12) abdeckt, und ein Endelement (23), das an das Grundelement (21,22) angefügt ist, dazu bestimmt, in dieses Teil (12) von mindestens dem zweiten Kabelkanal oder in das andere Zubehör einzugreifen, um einen Rand davon abzudecken, wobei das Grundelement (21,22) und das Endelement (23) zusätzliche Mittel zum Eingreifen (21C,21D,21'D,25,28) umfassen, die zusammenwirken, um eine relative Bewegung des Endelements (23) und des Grundelements (21,22) zwischen einer gespannten Position des Endelements (23) in Bezug auf das Grundelement (21,22) und einer eingeklappten Position des Endelements (23) auf dem Grundelement (21,22) zuzulassen; Zubehör, das **dadurch gekennzeichnet ist, dass** es elastische Rückholmittel (27) umfasst, die sich von den ergänzenden Mitteln zum Eingreifen (21C,21D,21'D,25,28) unterscheiden und sich dazu eignen, zwischen dem Grundelement (21,22) und dem Endelement (23) einzuwirken, um dieses wieder in die gespannte Position zurückzuholen.

2. Zubehör (20) nach Anspruch 1, **dadurch gekennzeichnet, dass** die Mittel zum Eingreifen (21C, 21D, 21'D,25,28) ein Schwenken des Endelements (23) in Bezug auf das Grundelement (21,22) zulassen.

3. Zubehör (20) nach Anspruch 1, **dadurch gekennzeichnet, dass** die Mittel zum Eingreifen eine Translation des Endelements in Bezug auf das Grundelement zulassen.

4. Zubehör (20) nach einem der Ansprüche 1 - 3, **dadurch gekennzeichnet, dass** die Mittel zum Eingreifen eine Rampe (21C) umfassen, auf der ein Schlitz (25) eingearbeitet ist.

5. Zubehör (20) nach Anspruch 4, **dadurch gekennzeichnet, dass** die Rampe (21C) zum Grundelement (21,22) und der Schlitz (25) zum Endelement (23) gehören.

6. Zubehör (20) nach einem der Ansprüche 4 oder 5, **dadurch gekennzeichnet, dass** sich die Rampe (21C) und der Schlitz (25) gemäß einem Kreisbogen erstrecken.

7. Zubehör (20) nach einem der Ansprüche 4 oder 5, **dadurch gekennzeichnet, dass** die Rampe und der Schlitz gerade sind.

8. Zubehör (20) nach einem der vorausgehenden Ansprüche, **dadurch gekennzeichnet, dass** die Mittel zum Eingreifen eine Rille (21'D) umfassen, in der eine Rippe (28) gleitet.

9. Zubehör (20) nach Anspruch 8, **dadurch gekennzeichnet, dass** die Rille (21'D) zum Grundelement und die Rippe (28) zum Endelement (23) gehören.

10. Zubehör (20) nach einem der Ansprüche 1 bis 9, **dadurch gekennzeichnet, dass** die elastischen Rückholmittel eine bewegliche Zunge (27) umfassen, die zwischen dem Grundelement (21,22) und dem Endelement (23) liegt.

11. Zubehör (20) nach Anspruch 10, **dadurch gekennzeichnet, dass** diese Zunge (27), die zusammen aus einem dieser Elemente geformt ist, an ihrem freien Ende auf einem äußeren Rand des anderen dieser Elemente aufliegt.

12. Zubehör (20) nach einem der Ansprüche 10 oder 11, **dadurch gekennzeichnet, dass** diese Zunge (27) mit dem Endelement (23) verbunden ist und sich frei in ein Fenster (26) erstreckt, das in diesem Endelement (23) vorgesehen ist.

13. Zubehör (20) nach einem der Ansprüche 1 bis 12, **dadurch gekennzeichnet, dass** das Endelement (23) zwei Flansche umfasst, nämlich einen äußeren Flansch (23B), der zum Abdecken des Randes des Teils (12) des zweiten Kabelkanals oder des Zubehörs bestimmt ist, sowie einen inneren Flansch (23C), zwischen denen ein Teil des Grundelements (21,22) sandwichartig eingeschoben ist.

14. Zubehör (20) nach Anspruch 13, **dadurch gekennzeichnet, dass** der innere Flansch (23C) des Endelements (23) einerseits einen Schlitz (25) umfasst, der mit einer Rampe (21C) zusammenwirkt, die aus diesem Teil dieses Grundelements (21,22) hervorsteht, sowie andererseits ein Fenster (26), in das sich eine bewegliche Zunge (27) frei erstreckt, welche mit einem Rand dieses Fensters (26) verbunden ist, wobei diese Zunge (27) auf einem äußeren Rand dieses Teils des Grundelements (21,22) aufliegt.

15. Zubehör (20) nach einem der Ansprüche 13 oder 14, **dadurch gekennzeichnet, dass** der innere Flansch (23C) des Endelements (23) eine Rippe (28) bildende Kante umfasst und dieses Teil des Grundelements (21,22) eine hervorstehende Rampe (21D) umfasst, in die eine Rille (21'D) eingearbeitet ist, in der diese Rippe (28) gleitet.

16. Zubehör (20) nach einem der vorausgehenden Ansprüche, **dadurch gekennzeichnet, dass** das Grundelement (21,22) mindestens einen teilbaren Abschnitt (A, B, C) umfasst.

17. Zubehör (20) nach Anspruch 16, **dadurch gekennzeichnet, dass** jeder teilbare Abschnitt (A,B,C) einen Winkelabschnitt bildet.

18. Zubehör (20) nach einem der Ansprüche 13 bis 17, **dadurch gekennzeichnet, dass** das Grundelement (21,22) einen mittleren Bereich (21) umfasst, auf dem das Endelement (23) und ein Endabschnitt (22) angebracht sind, der dem Endelement (23) gegenüberliegt, wobei der äußere Flansch (23B) des Endelements (23) einen äußeren Aspekt aufweist, der mit dem äußeren Aspekt des Endabschnitts (22) des Grundelements (21,22) identisch ist.

19. Zubehör (20) nach einem beliebigen der vorausgehenden Ansprüche, **dadurch gekennzeichnet, dass** es eine Backe bildet, die eine durchgehende Wand zwischen zwei Seitenflügeln (12) von zwei Kabelkanalsockeln (10) bildet, die sich in der gleichen Richtung bzw. in zwei unterschiedlichen Richtungen erstrecken.

20. Zubehör (20) nach Anspruch 19, **dadurch gekennzeichnet, dass** diese Backe eine Leiste (24) umfasst, die eine Kontinuität der Wände zwischen den Winkelabrundungen (14) der Seitenflügel (12) dieser Sockel (10) gewährleistet, wobei diese Leiste (24) Montagemittel (24A) für einen Deckelabschnitt (40) zum Schließen der Sockel (10) umfasst.
